(19) Europäisches Patentamt
European Patent Office
Office européen des brevets

(11) **EP 4 521 376 A1**

(12) **DEMANDE DE BREVET EUROPEEN**

(43) Date de publication:
**12.03.2025 Bulletin 2025/11**

(21) Numéro de dépôt: **23306493.0**

(22) Date de dépôt: **08.09.2023**

(51) Classification Internationale des Brevets (IPC):
**G08B 29/04** (2006.01)    **G08B 25/08** (2006.01)
**G08B 29/20** (2006.01)

(52) Classification Coopérative des Brevets (CPC):
**G08B 25/08; G08B 29/046; G08B 29/20;**
H04M 11/04

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**KH MA MD TN**

(71) Demandeur: **Telecom Design**
**33610 Canejan (FR)**

(72) Inventeurs:
• **FILHOL, Didier**
**83980 Le Lavandou (FR)**
• **MARLY, Stanislas**
**33700 Mérignac (FR)**

(74) Mandataire: **Ipside**
**6, Impasse Michel Labrousse**
**31100 Toulouse (FR)**

(54) **DISPOSITIF D' ALARME ADAPTÉ POUR ÉMETTRE UN MESSAGE D' ALERTE EN PRÉSENCE D'UN BROUILLAGE DE FRÉQUENCES**

(57) L'invention concerne une méthode (100) pour l'émission d'un message d'alerte par un dispositif d'alarme, vers un réseau cellulaire, en présence d'un brouillage de fréquences. La méthode comporte les étapes suivantes :
- à un premier instant ($t_1$), en absence de brouillage : une obtention (110) de ressources radio préconfigurées pouvant être utilisées pour l'émission du message d'alerte à au moins un instant futur ($t_{E1}$),
- à au moins un instant de calibration ($t_{C1}$) compris entre le premier instant ($t_1$) et ledit au moins un instant futur ($t_{E1}$) : une calibration (120) d'une horloge (12) du dispositif d'alarme pour corriger une éventuelle dérive de ladite horloge par rapport à une horloge du réseau cellulaire (20),
- lorsqu'une intrusion est détectée par le dispositif d'alarme : une vérification (130) si un brouillage est présent,
- si un brouillage est présent : une émission (140) du message d'alerte audit au moins un instant futur ($t_{E1}$) en utilisant les ressources radio préconfigurées.

Fig. 1

EP 4 521 376 A1

## Description

### Domaine de l'invention

La présente invention appartient au domaine des dispositifs d'alarme (dispositifs de détection d'intrusion dans une zone à protéger). Plus particulièrement, l'invention concerne un dispositif d'alarme adapté pour émettre un message d'alerte vers un réseau cellulaire en présence d'un brouillage des fréquences du réseau cellulaire.

### Etat de la technique

De nombreux dispositifs d'alarme sont proposés sur le marché pour protéger un bâtiment contre une intrusion. Ces dispositifs sont conçus pour détecter et signaler une intrusion non autorisée dans une zone à protéger (enceinte, maison, appartement, salle d'un bâtiment, etc.). Leur finalité est de contribuer à la surveillance et à la protection des bâtiments, des biens et des personnes.

Les dispositifs d'alarme sont généralement munis de capteurs infrarouges ou radar permettant de détecter une intrusion dans la zone à protéger. En réponse à la détection de l'intrusion, le dispositif peut déclencher des moyens de dissuasion (par exemple une sirène ou un générateur de fumigène) et émettre un message d'alerte à destination d'un serveur de télésurveillance.

Le message d'alerte est généralement émis à travers un réseau cellulaire de communication sans fil, comme par exemple un réseau LTE (acronyme anglais pour « Long Term Evolution », en français « évolution à long terme », il s'agit de la norme de quatrième génération, ou 4G, spécifiée par le consortium 3GPP) ou un réseau 5G-NR (acronyme anglais pour « 5G - New Radio », en français « 5G - Nouvelle radio », il s'agit de la norme 3GPP de cinquième génération).

Pour empêcher le dispositif d'alarme d'émettre le message d'alerte, une personne malintentionnée peut utiliser un brouilleur de fréquences. Un brouilleur est un émetteur radio conçu pour brouiller, perturber ou bloquer des signaux de radiocommunication. En général, il agit en émettant un signal de bruit à un niveau de puissance radio plus élevé que les signaux utiles, sur une ou plusieurs bandes de fréquences. Les signaux utiles ne sont alors plus détectés par les récepteurs.

Pour pallier ce problème, il est connu de transmettre le message d'alerte via un réseau de communication sans fil particulier qui utilise des techniques de transmission radio qui sont peu sensibles au brouillage de fréquences. Il peut notamment s'agir d'un réseau de type LPWAN (acronyme anglais pour « Low Power Wide Area Network », en français « réseau étendu bas débit ») qui utilise la technique de communication en bande ultra-étroite (UNB pour « Ultra Narrow Band » en anglais). Le brevet EP 3 477 611 B1 donne un exemple d'un dispositif d'alarme comportant un module de communication radio configuré pour envoyer un message d'alerte vers un réseau LPWAN en mode monodirectionnel lorsqu'un brouillage radio est détecté.

Un tel réseau LPWAN mettant en oeuvre une technologie radio résistante face au brouillage n'est toutefois pas toujours disponible. Dans un tel cas, il est nécessaire d'utiliser un réseau cellulaire pour émettre le message d'alerte. Contrairement aux réseaux LPWAN avec liaison monodirectionnelle, les réseaux cellulaires sont bidirectionnels, cela signifie qu'un terminal et une station de base du réseau cellulaire doivent être synchronisés en temps et en fréquence pour communiquer. Aussi, le terminal doit recevoir un message de la station de base sur un lien descendant pour obtenir des ressources radio à utiliser sur un lien montant pour émettre un message. Or, dans le cas d'un brouillage de fréquences au niveau du terminal, ce dernier ne sera pas capable de recevoir le message d'allocation de ressources pour la transmission du message d'alerte.

### Exposé de l'invention

La présente invention a pour objectif de remédier à tout ou partie des inconvénients de l'art antérieur, notamment ceux exposés ci-avant.

A cet effet, et selon un premier aspect, il est proposé par la présente invention une méthode pour l'émission d'un message d'alerte par un dispositif d'alarme en présence d'un brouillage de bandes de fréquences d'un lien descendant du réseau cellulaire. La méthode comporte les étapes suivantes :

- à un premier instant, en absence de brouillage : une obtention, à partir d'un message émis par le réseau cellulaire et reçu par le dispositif d'alarme, de ressources radio préconfigurées pouvant être utilisées pour l'émission du message d'alerte à au moins un instant futur,
- à au moins un instant de calibration compris entre le premier instant et ledit au moins un instant futur : une calibration d'une horloge du dispositif d'alarme pour corriger une éventuelle dérive de ladite horloge par rapport à une horloge du réseau cellulaire,
- lorsqu'une intrusion est détectée par le dispositif d'alarme : une vérification si un brouillage est présent,
- si un brouillage est présent : une émission du message d'alerte audit au moins un instant futur en utilisant les ressources radio préconfigurées.

Dans des modes particuliers de mise en oeuvre, l'invention peut comporter en outre l'une ou plusieurs des caractéristiques suivantes, prises isolément ou selon toutes les combinaisons techniquement possibles.

Dans des modes particuliers de mise en oeuvre, le réseau cellulaire est un réseau LTE ou 5G-NR supportant la procédure « PUR » définie par la spécification 3GPP R16 ; les ressources radio préconfigurées sont définies par une configuration « PUR » reçue par le dispositif d'alarme dans un message de relâchement de connexion, « RRC Release », émis par une station du réseau cellulaire ; le message d'alerte est émis par le dispositif d'alarme sur un canal partagé de liaison montante, « (N)PUSCH », indépendamment d'une condition relative au niveau de puissance reçue d'un signal de référence, « (N)RSRP », ou à une avance en temps, « TA », pour ladite station.

Dans des modes particuliers de mise en oeuvre, le réseau cellulaire est un réseau 5G-NR supportant la procédure « CG-SDT Type 1 » définie par la spécification 3GPP R17 ; les ressources radio préconfigurées sont définies par une configuration « CG-SDT Type 1 » reçue par le dispositif d'alarme dans un message de relâchement de connexion, « RRC Release », émis par une station du réseau cellulaire ; le message d'alerte est émis par le dispositif d'alarme sur un canal partagé de liaison montante, « (N)PUSCH », indépendamment d'une condition relative au niveau de puissance reçue d'un signal de référence, « (N)RSRP », ou à une avance en temps, « TA », pour ladite station.

Dans des modes particuliers de mise en oeuvre, le réseau cellulaire est un réseau 5G-NR supportant la procédure de transmission en deux étapes d'un paquet court sur un canal d'accès aléatoire, « 2-steps RA-SDT », définie par la spécification 3GPP R17 ; les ressources radio préconfigurées sont définies par une configuration « PRACH » reçue par le dispositif d'alarme dans un message d'information système, « SIB1 », émis par une station du réseau cellulaire ; le message d'alerte est émis par le dispositif d'alarme sur un canal d'accès aléatoire, « (N)PRACH », indépendamment d'une condition relative au niveau de puissance reçue d'un signal de référence, « (N)RSRP », pour ladite station.

Dans des modes particuliers de mise en oeuvre, les ressources radio préconfigurées définissent plusieurs opportunités d'émission à plusieurs instants futurs, et le message d'alerte est émis de façon répétée à plusieurs desdits instants futurs.

Dans des modes particuliers de mise en oeuvre, l'étape de calibration comporte :

- un calcul d'un temps horloge correspondant à un nombre de coups d'horloge effectués par l'horloge du dispositif d'alarme entre un instant de réception d'une première trame de synchronisation, et un instant de réception d'une deuxième trame de synchronisation,
- un calcul d'un décalage correspondant à une différence de temps entre le temps horloge et un temps de référence correspondant à une différence temporelle théorique séparant la première et la deuxième trames de synchronisation,
- une mise à jour de l'horloge du dispositif d'alarme en fonction du décalage ainsi calculé.

Dans des modes particuliers de mise en oeuvre, l'horloge du dispositif d'alarme est une horloge de haute précision et basse fréquence, le dispositif d'alarme comporte en outre une horloge supplémentaire de faible précision et haute fréquence, et l'étape de calibration comporte :

- à chaque coup d'horloge de l'horloge basse fréquence, une réinitialisation d'un compteur de coups d'horloge de l'horloge haute fréquence,
- une détermination d'un nombre de coups d'horloge de l'horloge basse fréquence entre un instant de réception d'une première trame de synchronisation, et un instant de réception d'une deuxième trame de synchronisation,
- un calcul d'un temps horloge en fonction du nombre de coups d'horloge de l'horloge basse fréquence, et en fonction des nombres de coups d'horloge indiqués par le compteur de coups d'horloge de l'horloge haute fréquence respectivement à l'instant de réception de la première trame de synchronisation et à l'instant de réception de la deuxième trame de synchronisation,
- un calcul d'un décalage correspondant à une différence entre le temps horloge ainsi calculé, et un temps de référence correspondant à une différence temporelle théorique séparant la première et la deuxième trames de synchronisation,
- une mise à jour de l'horloge basse fréquence en fonction du décalage ainsi calculé.

Dans des modes particuliers de mise en oeuvre, ledit au moins un instant de calibration est défini par le dispositif d'alarme en fonction d'une durée maximale de dérive, ladite durée maximale de dérive étant prédéfinie en fonction de la durée d'un préfixe cyclique présent dans une trame du réseau cellulaire et en fonction d'un niveau de précision de l'horloge du dispositif d'alarme.

Dans des modes particuliers de mise en oeuvre, l'étape de vérification si un brouillage est présent comporte :

- un découpage d'au moins une bande de fréquences du lien descendant du réseau cellulaire en plusieurs sous-bandes de fréquences,
- une mesure, pour chaque sous-bande de fréquences, d'un niveau de puissance radio reçue,
- une évaluation d'un critère de détection de brouillage en fonction des mesures obtenues.

Selon un deuxième aspect, la présente invention concerne un dispositif d'alarme adapté pour émettre un message d'alerte vers un réseau cellulaire en présence d'un brouillage de bandes de fréquences d'un lien descendant du réseau cellulaire. Le dispositif d'alarme comprend un module de communication sans fil adapté pour communiquer avec le réseau cellulaire, une horloge, un module de détection de brouillage, et un module de détection d'intrusion. Le dispositif d'alarme est configuré pour :

- à un premier instant, en absence de brouillage : obtenir des ressources radio préconfigurées, à partir d'un message émis par le réseau cellulaire et reçu par le module de communication, lesdites ressources radio préconfigurées pouvant être utilisées par le module de communication pour émettre le message d'alerte à au moins un instant futur,
- à au moins un instant de calibration compris entre le premier instant et ledit au moins un instant futur : calibrer l'horloge pour corriger une éventuelle dérive de ladite horloge par rapport à une horloge du réseau cellulaire,
- lorsqu'une intrusion est détectée par le module de détection d'intrusion : vérifier si un brouillage est présent à l'aide du module de détection de brouillage,
- si un brouillage est présent : émettre le message d'alerte audit au moins un instant futur en utilisant les ressources radio préconfigurées.

Dans des modes particuliers de réalisation, l'invention peut comporter en outre l'une ou plusieurs des caractéristiques suivantes, prises isolément ou selon toutes les combinaisons techniquement possibles.

Dans des modes particuliers de mise en oeuvre, le module de communication est configuré pour recevoir les ressources radio préconfigurées dans une configuration « PUR » incluse dans un message de relâchement de connexion, « RRC Release », émis par une station du réseau cellulaire. Le module de communication est configuré pour émettre le message d'alerte sur un canal partagé de liaison montante, « (N) PUSCH », indépendamment d'une condition relative au niveau de puissance reçue d'un signal de référence, « (N) RSRP », ou à une avance en temps, « TA », pour ladite station.

Dans des modes particuliers de mise en oeuvre, le module de communication est configuré pour recevoir les ressources radio préconfigurées dans une configuration « CG-SDT Type 1 » incluse dans un message de relâchement de connexion, « RRC Release », émis par une station du réseau cellulaire. Le module de communication est configuré pour émettre le message d'alerte sur un canal partagé de liaison montante, « (N) PUSCH », indépendamment d'une condition relative au niveau de puissance reçue d'un signal de référence, « (N) RSRP », ou à une avance en temps, « TA », pour ladite station.

Dans des modes particuliers de mise en oeuvre, le module de communication est configuré pour recevoir les ressources radio préconfigurées dans une configuration « PRACH » incluse dans un message d'information système, « SIB1 », émis par une station du réseau cellulaire. Le module de communication est configuré pour émettre le message d'alerte sur un canal d'accès aléatoire, « (N)PRACH », indépendamment d'une condition relative au niveau de puissance reçue d'un signal de référence, « (N)RSRP », pour ladite station.

Dans des modes particuliers de mise en oeuvre, le dispositif d'alarme est configuré pour :

- calculer un temps horloge correspondant à un nombre de coups d'horloge effectués par l'horloge entre un instant de réception d'une première trame de synchronisation, et un instant de réception d'une deuxième trame de synchronisation,
- calculer un décalage correspondant à une différence entre le temps horloge et un temps de référence correspondant à une différence temporelle théorique séparant la première et la deuxième trames de synchronisation,
- mettre à jour l'horloge en fonction du décalage ainsi calculé.

Dans des modes particuliers de mise en oeuvre, l'horloge du dispositif d'alarme est une horloge de haute précision et basse fréquence, le dispositif d'alarme comporte en outre une horloge supplémentaire de faible précision et haute fréquence, et le dispositif d'alarme est configuré pour :

- à chaque coup d'horloge de l'horloge basse fréquence, réinitialiser un compteur de coups d'horloge de l'horloge haute fréquence,
- déterminer un nombre de coups d'horloge de l'horloge basse fréquence entre un instant de réception d'une première trame de synchronisation, et un instant de réception d'une deuxième trame de synchronisation,
- calculer un temps horloge en fonction du nombre de coups d'horloge de l'horloge basse fréquence, et en fonction des nombres de coups d'horloge indiqués par le compteur de coups d'horloge de l'horloge haute fréquence respectivement à l'instant de réception de la première trame de synchronisation et à l'instant de réception de la deuxième trame de synchronisation,
- calculer un décalage correspondant à une différence entre le temps horloge et un temps de référence correspondant à une différence temporelle théorique séparant la première et la deuxième trames de synchronisation,
- mettre à jour l'horloge basse fréquence en fonction du décalage ainsi calculé.

**Présentation des figures**

L'invention sera mieux comprise à la lecture de la description suivante, donnée à titre d'exemple nullement limitatif, et faite en se référant aux figures 1 à 11 qui représentent :

[Fig. 1] une représentation schématique des principales étapes d'un exemple de mise en oeuvre d'une méthode selon l'invention pour émettre un message d'alerte en présence de brouillage,

[Fig. 2] une autre représentation des principales étapes d'un exemple de mise en oeuvre de la méthode selon l'invention,

[Fig. 3] un diagramme temporel représentant plusieurs opportunités d'émission et plusieurs procédures de calibration de l'horloge du dispositif d'alarme,

[Fig. 4] une représentation schématique d'un dispositif d'alarme émettant un message d'alerte à destination d'un serveur de télésurveillance par l'intermédiaire d'un réseau cellulaire,

[Fig. 5] un diagramme de séquence illustrant un premier exemple de mise en oeuvre des étapes d'obtention de ressources radio préconfigurés, et d'émission d'un message d'alerte en utilisant ces ressources,

[Fig. 6] un diagramme de séquence illustrant un deuxième exemple de mise en oeuvre des étapes d'obtention de ressources radio préconfigurés, et d'émission d'un message d'alerte en utilisant ces ressources,

[Fig. 7] une représentation schématique d'un premier mode de réalisation d'un dispositif d'alarme selon l'invention,

[Fig. 8] une représentation schématique d'un deuxième mode de réalisation d'un dispositif d'alarme selon l'invention,

[Fig. 9] une représentation schématique de la calibration de l'horloge du dispositif d'alarme selon le premier mode de réalisation illustré à la figure 7,

[Fig. 10] une représentation schématique de la calibration de l'horloge du dispositif d'alarme selon le deuxième mode de réalisation illustré à la figure 8,

[Fig. 11] un diagramme de séquence illustrant une procédure classique d'accès aléatoire en quatre étapes.

Dans ces figures, des références identiques d'une figure à une autre désignent des éléments identiques ou analogues. Pour des raisons de clarté, les éléments représentés ne sont pas nécessairement à une même échelle, sauf mention contraire.

**Description détaillée de l'invention**

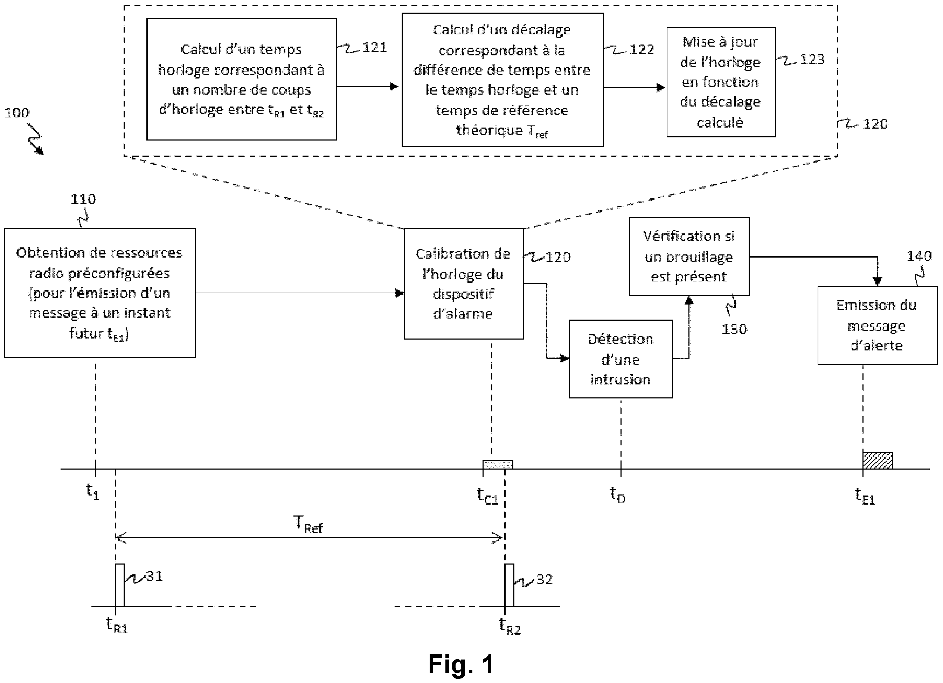

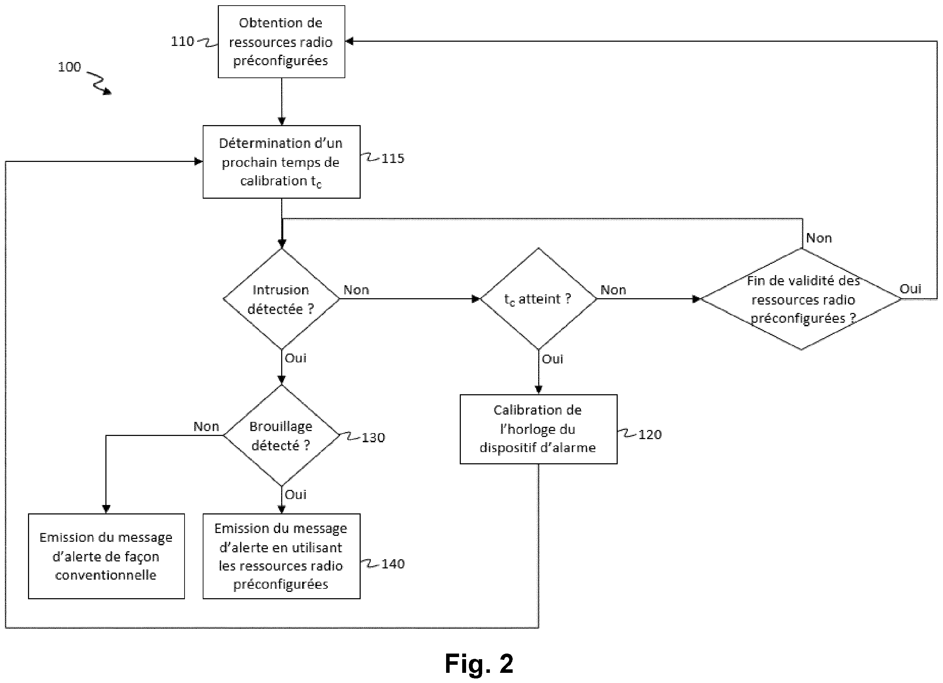

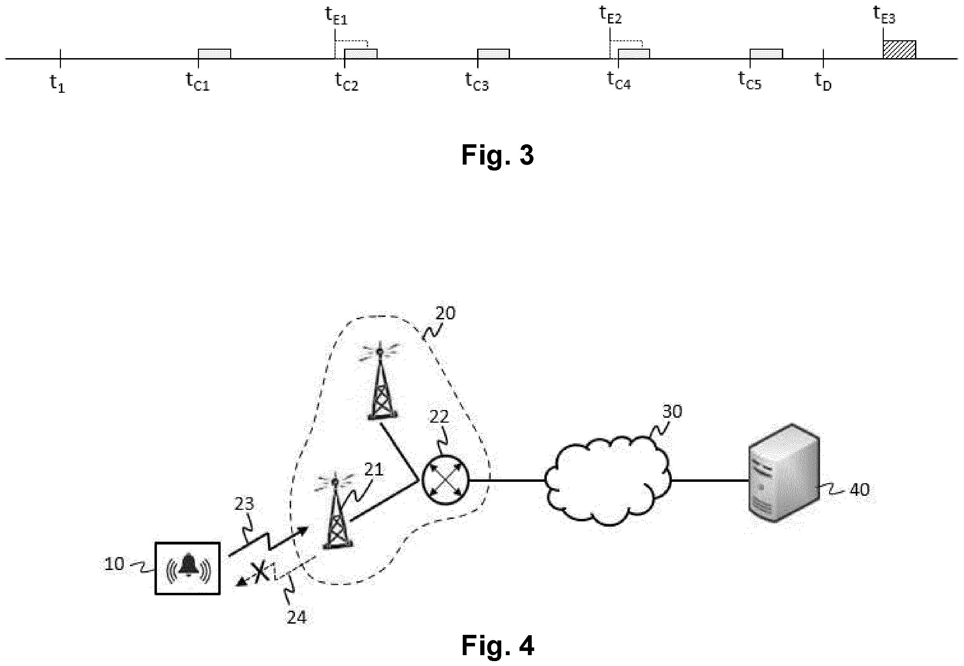

Les figures 1 et 2 représentent de façon schématique les principales étapes d'un exemple de mise en oeuvre d'une méthode 100 selon l'invention pour permettre à un dispositif d'alarme d'émettre un message d'alerte même en présence d'un brouillage de fréquences. La figure 4 représente l'émission d'un message d'alerte par un dispositif d'alarme 10 à destination d'un serveur 40 de télésurveillance par l'intermédiaire d'un réseau cellulaire 20. Le message d'alerte est émis sur un lien montant 23 du dispositif d'alarme 10 vers le réseau cellulaire 20.

Le dispositif d'alarme 10 est par exemple conçu pour détecter et signaler une intrusion non autorisée dans une zone à protéger. Il peut s'agir d'une zone extérieure (enceinte, cour, jardin, etc.) ou d'une zone intérieure (maison, appartement, salle d'un bâtiment, etc.). Le serveur 40 de télésurveillance est par exemple mis en oeuvre par un opérateur de télésurveillance pour déclencher des actions en réponse au message d'alerte (établissement d'une communication avec un responsable de la zone protégée dans laquelle l'intrusion a eu lieu, envoi d'un agent de sécurité sur la zone, etc.). La communication entre le dispositif d'alarme 10 et le serveur 40 de télésurveillance est établie par l'intermédiaire du réseau cellulaire 20. Ce réseau cellulaire 20 est un réseau de communication sans fil qui joue le rôle de réseau d'accès radio (RAN pour « Radio Access Network » en anglais) vers un réseau coeur 30 (par exemple le réseau Internet) auquel le serveur 40 de télésurveillance est connecté. Le réseau cellulaire 20 correspond par exemple à un réseau LTE, un réseau 5G-NR, ou un réseau 3GPP de sixième génération (6G). Il peut s'agir d'un réseau cellulaire pour objet connecté (IoT pour « Internet of Things » en anglais, « internet des objets » en français), comme par exemple un réseau de type LTE-M (ou LTE-CAT-M pour « LTE catégorie M ») ou NB-IoT (acronyme anglais pour « Narrow-Band IoT », « IoT bande étroite » en français). LTE-M et NB-IoT sont des déclinaisons des réseaux LTE et 5G-NR pour l'IoT. Tel qu'illustré schématiquement sur la figure 4, le réseau cellulaire 20 comporte des stations de base 21 connectées à des infrastructures 22 servant de passerelles vers le réseau coeur 30.

Le dispositif d'alarme 10 est configuré pour mettre en oeuvre la méthode 100 selon l'invention. En particulier, le dispositif d'alarme 10 est configuré pour pouvoir émettre le message d'alerte vers le réseau cellulaire 20 même en présence d'un brouillage des bandes de fréquences du lien descendant 24 du réseau cellulaire 20. Sur la figure 4, le brouillage de fréquences du lien descendant 24 est représenté par une croix. Cela signifie qu'en présence de brouillage le dispositif d'alarme 10 n'est plus capable de recevoir un message provenant du réseau cellulaire 20. Le brouillage de fréquences est par exemple mis en oeuvre par une personne malintentionnée pour empêcher le dispositif d'alarme d'émettre le message d'alerte. Le brouillage consiste par exemple à émettre un signal de bruit à un niveau de puissance radio plus élevé que les signaux utiles, sur une ou plusieurs bandes de fréquences du lien descendant 24 du réseau cellulaire 20. Les signaux utiles ne peuvent alors plus être détectés par les récepteurs situés à proximité du brouilleur.

Il convient de noter que le brouillage affecte principalement le lien descendant 24, et qu'il n'impacte pas significativement le lien montant 23. En d'autres termes, le brouillage empêche le dispositif d'alarme 10 de recevoir un message provenant du réseau cellulaire 20, mais il n'empêche pas le réseau cellulaire 20 de recevoir un message émis par le dispositif d'alarme 10. Toutefois, pour pouvoir émettre un message à destination du réseau cellulaire 20, le dispositif d'alarme 10 doit pouvoir se synchroniser avec le réseau cellulaire 20 et recevoir des ressources radio allouées par le réseau cellulaire 20. Un brouillage du lien descendant 23 permet donc généralement aussi d'empêcher le dispositif d'alarme 10 d'émettre un message. L'invention décrite dans la présente demande offre une solution pour permettre au dispositif d'alarme 10 d'émettre un message d'alerte vers le réseau cellulaire 20 même en présence d'un brouillage des bandes de fréquences du lien descendant 24 du réseau cellulaire 20.

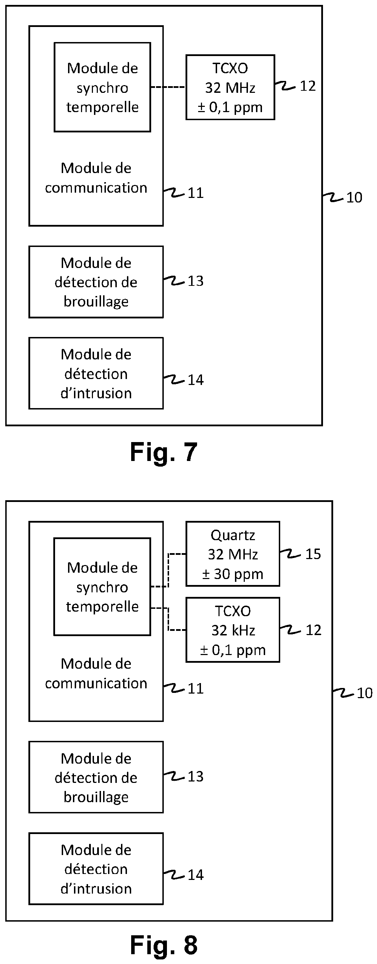

Les figures 7 et 8 représentent schématiquement des exemples de réalisation d'un dispositif d'alarme 10 selon l'invention. Le dispositif d'alarme 10 comporte notamment un module de communication 11, une horloge 12, un module de détection de brouillage 13 et un module de détection d'intrusion 14.

Le module de communication 11 implémente les fonctions permettant au dispositif d'alarme 10 de communiquer avec le réseau cellulaire 20. Notamment, le module de communication 11 comporte des moyens logiciels et/ou matériel configurés pour échanger (envoyer et recevoir) des messages avec le réseau cellulaire 20. Ces moyens sont considérés comme connus de l'homme du métier.

L'horloge 12 est utilisée par le module de communication pour se synchroniser temporellement et fréquentiellement avec une horloge du réseau cellulaire 20. En effet, pour pouvoir recevoir un message en provenance du réseau cellulaire 20, ou pour pouvoir émettre un message à destination du réseau cellulaire 20, le module de communication 11 doit être capable de déterminer précisément l'instant de début d'une trame de communication. Dans le cas LTE ou 5G-NR, une trame de communication dure dix millisecondes ; chaque trame comporte dix sous-trames ; chaque sous-trame comporte deux slots ; chaque slot comporte sept symbole OFDMA (acronyme anglais de « Orthogonal Frequency Division Multiple Access », en français « accès multiple par répartition orthogonale de la fréquence », il s'agit d'une technique de multiplexage et de codage de données). Chaque symbole OFMA comporte des échantillons radio et un préfixe cyclique (CP pour « Cyclic Prefix » en anglais). Le préfixe cyclique est utilisé comme un intervalle de garde (marge temporelle), afin de conserver l'orthogonalité et les propriétés sinusoïdales du signal en cas de trajets multiples. Le premier préfixe cyclique d'une trame de communication présente une durée d'environ 5,2 $\mu$s (microsecondes) ; les préfixes cycliques précédant les six autres symboles ont une durée d'environ 4,7 $\mu$s. L'instant d'émission d'un message par le dispositif d'alarme 10 doit généralement présenter une précision inférieure à la durée d'un préfixe cyclique pour que le message soit correctement reçu par le réseau cellulaire 20. L'horloge 12 correspond par exemple à un oscillateur à quartz compensé en température (TCXO en anglais, pour « Température Controlled X (Crystal) Oscillator »).

Les matériaux des cristaux et les processus de fabrication de l'horloge 12 du dispositif d'alarme 10 et de l'horloge de la station de base 21 à laquelle le dispositif d'alarme 10 est connecté sont différents et cela peut engendrer un décalage entre les horloges. Ce décalage fréquentiel peut aussi être impacté par des facteurs environnementaux comme la température ou l'humidité. Comme on le verra par la suite, il est donc nécessaire de corriger une éventuelle dérive de l'horloge 12 du dispositif d'alarme 10 par rapport à l'horloge de la station de base 21 (toutefois l'estimation du décalage fréquentiel permettant cette correction ne peut conventionnellement pas être fait en présence de brouillage).

Le module de détection de brouillage 13 comporte des moyens logiciels et/ou matériel pour implémenter les fonctions permettant au dispositif d'alarme 10 de vérifier si un brouillage des bandes de fréquences du lien descendant 24 du réseau cellulaire 20 est présent ou non. Le module de détection de brouillage 13 peut notamment s'interfacer avec le module de communication 11 et/ou réutiliser des sous-modules du module de communication 11. Rien n'empêcherait non plus, dans une variante, que le module de détection de brouillage soit intégré au sein du module de communication 11.

Le module de détection d'intrusion 14 comporte des moyens logiciels et/ou matériel pour détecter si une intrusion a été commise dans la zone à protéger. Ces moyens sont considérés comme connus de l'homme de l'art. De façon conventionnelle, le module de détection d'intrusion 14 peut notamment s'interfacer avec des capteurs infrarouges, des capteurs radar, et/ou des détecteurs d'ouverture de porte ou de fenêtre. Ces capteurs peuvent être intégrés au sein du dispositif d'alarme 10, mais ils peuvent aussi correspondre à des entités physiques distinctes du dispositif d'alarme 10. Lorsque les capteurs sont des entités physiques distinctes du dispositif d'alarme 10, ces capteurs peuvent communiquer avec le module de détection d'intrusion 14 en utilisant un protocole de communication sans fil différent de celui mis en oeuvre par le réseau cellulaire 20, et la communication entre les capteurs et le module de détection d'intrusion 14 n'est alors pas compromise par le brouillage des fréquences du réseau cellulaire 20.

Le dispositif d'alarme 10 est configuré pour mettre en oeuvre les étapes de la méthode 100 selon l'invention pour pouvoir émettre un message d'alerte même en présence de brouillage. Le module de communication 11, l'horloge 12, le module de détection de brouillage 13 et le module de détection d'intrusion 14 représentent des moyens configurés de façon logicielle et/ou matérielle pour mettre en oeuvre cette méthode 100. Le dispositif d'alarme 10 peut notamment comporter un ou plusieurs processeurs et des moyens de mémorisation (mémoire électronique) dans lesquels est mémorisé un produit programme d'ordinateur, sous la forme d'un ensemble d'instructions de code de programme à exécuter pour mettre en oeuvre les différentes étapes de la méthode 100. Le module de communication 11, le module de détection de brouillage 13 et le module de détection d'intrusion 14 peuvent être mis en oeuvre par un seul et même processeur, ou bien par plusieurs processeurs distincts. Alternativement ou en complément, le dispositif d'alarme 10 peut comporter un ou plusieurs circuits logiques programmables (FPGA, PLD, etc.), et/ou un ou des circuits intégrés spécialisés (ASIC), et/ou un ensemble de composants électroniques discrets adaptés à mettre en oeuvre les étapes de la méthode 100.

Tel qu'illustré par les figures 1 et 2, la méthode 100 comporte les étapes suivantes :

- à un premier instant $t_1$, en absence de brouillage : une étape d'obtention 110, à partir d'un message émis par le réseau cellulaire 20 et reçu par le dispositif d'alarme 10, de ressources radio préconfigurées pouvant être utilisées pour l'émission du message d'alerte à au moins un instant futur d'émission $t_{E1}$,
- à au moins un instant de calibration $t_{C1}$ compris entre le premier instant $t_1$ et l'instant futur $t_{E1}$: une étape de calibration 120 de l'horloge 12 du dispositif d'alarme 10 pour en corriger une éventuelle dérive par rapport à une horloge du réseau cellulaire 20,
- lorsqu'une intrusion est détectée par le dispositif d'alarme 10 (à l'instant de détection d'intrusion $t_D$) : une étape de vérification 130 si un brouillage est présent,
- si un brouillage est présent : une étape d'émission 140 du message d'alerte à l'instant futur $t_{E1}$ en utilisant les ressources radio préconfigurées.

Les ressources radio préconfigurées sont des ressources radio en temps et en fréquence pour le lien montant 23 : elles définissent un ou plusieurs slots temporels et une ou plusieurs fréquences à utiliser pour l'émission d'un message par le dispositif d'alarme 10 vers le réseau cellulaire 20.

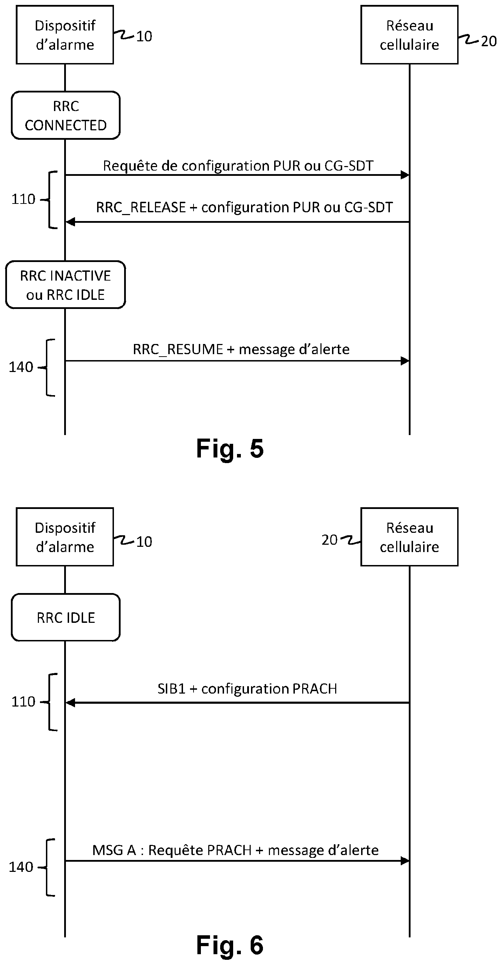

Comme on le verra par la suite, il peut s'agir par exemple de ressources radio d'un canal partagé de lien montant physique : canal PUSCH (acronyme anglais pour « Physical Uplink Shared Channel ») dans le cas LTE ou 5G-NR, ou canal NPUSCH (acronyme anglais pour « Narrow-Band Physical Uplink Shared Channel ») dans le cas spécifique LTE-M ou NB-IoT. Ces ressources radio préconfigurées peuvent notamment être obtenues via les procédures « PUR » (acronyme anglais de « Preconfigured Uplink Resource ») ou « CG-SDT Type 1 » (pour « Configured Grant Small Data Transmission Type 1 »). Ces procédures seront décrites plus en détail ultérieurement en référence à la figure 5. Dans un tel cas, les ressources radio préconfigurées sont des ressources allouées spécifiquement par le réseau cellulaire 20 pour le dispositif d'alarme 10 (ces ressources radio ne peuvent pas être utilisées par un autre dispositif).

Selon un autre exemple, il peut s'agir de ressources radio d'un canal d'accès aléatoire par paquets (canal PRACH, pour « Packet Random Access Channel »). Ces ressources radio préconfigurées correspondent par exemple à une configuration PRACH reçue par le dispositif d'alarme 10 dans un message d'information système (SIB1, pour « System Information Block #1 ») émis par le réseau cellulaire 20. Ces ressources radio peuvent notamment être utilisées par le dispositif d'alarme 10 dans une procédure de transmission en deux étapes d'un paquet court sur un canal d'accès aléatoire (« 2-steps RA-SDT », pour « Two-steps Random Access Small Data Transmission i»). Cette procédure sera décrite plus en détail ultérieurement en référence à la figure 6. Dans un tel cas, les ressources radio préconfigurées sont des ressources partagées entre plusieurs utilisateurs du réseau cellulaire 20. Autrement dit, ces ressources radio ne sont pas exclusivement réservées au dispositif d'alarme 10, et il peut par conséquent y avoir des collisions entre plusieurs utilisateurs (un ou plusieurs utilisateurs peuvent utiliser ces ressources radio en même temps que le dispositif d'alarme 10).

Tel qu'illustré sur la figure 3, les ressources radio préconfigurées peuvent définir plusieurs opportunités d'émission dans le futur ($t_{E1}$, $t_{E2}$, $t_{E3}$). Il peut s'agir de plusieurs instants d'émission configurés par la procédure PUR ou par la procédure CG-SDT, ou bien il peut s'agir de plusieurs opportunités PRACH.

La distance temporelle entre le premier instant $t_1$ et un instant futur d'émission (par exemple $t_{E1}$ ou $t_{E3}$) peut être supérieure à quelques dizaines de secondes, par exemple au moins égale à trente secondes, voire au moins égale à une minute. En particulier, pour le protocole PUR, la distance temporelle entre le premier instant $t_1$ et le premier instant futur d'émission correspond à au moins huit hyper-trames (une hyper-trame correspond à 1024 trames ; une hyper-trame a donc une durée de 10,24 secondes). Cela correspond donc à une distance temporelle au moins égale à 81,92 secondes.

Il est avantageux d'obtenir des ressources radio préconfigurées offrant des opportunités d'émission proches dans le temps, de telle sorte que le message d'alerte puisse être émis au plus vite lorsqu'une intrusion est détectée.

Tel qu'illustré sur les figures 2 et 3, plusieurs instants de calibration ($t_{C1}$, $t_{C2}$, $t_{C3}$) peuvent être définis, par exemple avec une répétition périodique. Comme on le verra par la suite, les instants de calibration peuvent notamment être définis par le dispositif d'alarme en fonction de la précision de l'horloge 12, en fonction de la durée d'un préfixe cyclique d'une trame, et/ou en fonction des instants futurs d'émission ($t_{E1}$, $t_{E2}$, $t_{E3}$). Les instants de calibration sont définis par le dispositif d'alarme 10, et ils ne sont pas spécifiés par le standard implémenté par le réseau cellulaire 20.

Il est à noter que, tel qu'illustré sur la figure 2, les étapes 110 (obtention des ressources radio préconfigurées) et 120 (calibration de l'horloge 12 du dispositif d'alarme 10) peuvent être itérées plusieurs fois avant qu'une intrusion soit détectée.

En particulier, et tel qu'illustré sur la figure 2, l'étape 115 de détermination d'un prochain temps de calibration peut être renouvelée à chaque fois qu'une calibration 120 de l'horloge 12 du dispositif d'alarme 10 est effectuée, tant qu'il n'y pas d'intrusion détectée. Une nouvelle calibration 120 de l'horloge 12 est effectuée à chaque fois qu'un instant de calibration est atteint.

Aussi, et tel qu'illustré sur la figure 2, il est possible que les ressources radio préconfigurées soient valides seulement pour une durée prédéterminée. Lorsque la fin de validité des ressources radio préconfigurées est atteinte, l'étape d'obtention 110 de ressources radio préconfigurées peut alors être renouvelée pour obtenir de nouvelles ressources radio préconfigurées. Ce renouvellement des ressources radio préconfigurées peut avoir lieu plusieurs fois (potentiellement un grand nombre de fois) avant qu'une intrusion ne soit détectée. A titre d'exemple, les ressources radio préconfigurées peuvent devenir invalides si un nombre prédéfini d'occasions de transmission successives ne sont pas utilisées. En particulier, il est avantageux de répéter périodiquement le renouvellement des ressources radio préconfigurées de telle sorte à conserver en permanence au moins une opportunité d'émission d'un message d'alerte dans le futur (c'est-à-dire de sorte à avoir en permanence au moins un instant futur d'émission configuré).

Tel qu'illustré sur la figure 2, en réponse à la détection d'une intrusion, le dispositif d'alarme 10 procède à une vérification 130 si un brouillage de fréquences du lien descendant 24 est présent.

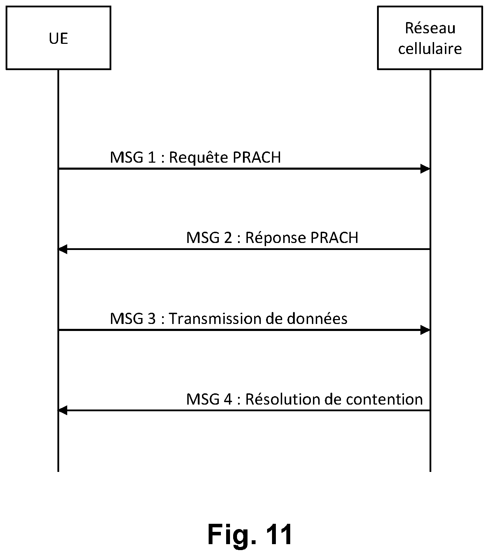

En l'absence de brouillage (c'est-à-dire dans le cas où l'étape de vérification 130 indique qu'il n'y a pas de brouillage), le message d'alerte peut être émis de façon conventionnelle, par exemple avec une procédure de canal d'accès aléatoire par paquets en quatre étapes (4-steps PRACH). Cette procédure permet notamment d'assurer une synchronisation précise entre le dispositif d'alarme 10 et le réseau cellulaire 20 juste avant l'émission du message d'alerte. Cela permet également d'émettre le message d'alerte au plus vite (pas besoin d'atteindre que l'instant futur d'émission défini par les ressources préconfigurées soit atteint). La procédure classique d'accès aléatoire en quatre étapes est décrite ci-après en référence à la figure 11.

En revanche, si un brouillage est présent (c'est-à-dire dans le cas où l'étape de vérification 130 indique qu'il y a un brouillage), le dispositif d'alarme 10 procède à une émission 140 du message d'alerte à l'instant futur ($t_{E1}$ sur l'exemple de la figure 1, $t_{E3}$ sur l'exemple de la figure 3) en utilisant les ressources radio préconfigurées. Dans ce cas, il est important de noter que cette émission 140 du message d'alerte est effectuée sans nécessiter la réception d'un message sur le lien descendant 24 entre l'instant de détection du brouillage et l'instant d'émission du message d'alerte (la réception d'un tel message n'est pas possible en raison du brouillage). La ou les étapes de calibration 120 qui ont été effectuées entre l'instant d'obtention des ressources radio préconfigurées et l'instant d'émission du message d'alerte permettent avantageusement de compenser l'absence de synchronisation précise entre le dispositif d'alarme 10 et le réseau cellulaire 20 juste avant l'émission du message d'alerte.

La figure 5 illustre les étapes d'obtention 110 des ressources radio préconfigurées et d'émission 140 du message d'alerte lorsque la méthode 100 se base sur la procédure « PUR » ou sur la procédure CG-SDT Type 1. La procédure PUR est définie par la spécification 3GPP R16 (Release 16). La procédure CG-SDT Type 1 est définie par la spécification 3GPP R17 (Release 17).

Tel qu'illustré sur la figure 5, lorsque le dispositif d'alarme 10 est en mode connecté (mode « RRC_CONNECTED »), une configuration PUR ou une configuration CG-SDT peut être obtenue dans un message « RRC Release » (message de relâchement de connexion) émis par la station de base 21 du réseau cellulaire 20 à laquelle le dispositif d'alarme 10 est connectée (en réponse à une requête préalablement émise par le dispositif d'alarme 10). Le dispositif d'alarme 10 passe ensuite en mode veille (mode « RRC_IDLE ») dans le cas PUR, ou en mode inactif (mode « RRC_INACTIVE ») dans le cas CG-SDT. Le dispositif d'alarme 10 a ensuite la possibilité d'émettre un message d'alerte à chaque opportunité d'émission définie par la configuration PUR ou CG-SDT. Le message d'alerte est inclus dans un message de reprise de connexion (message « RRC Resume ») émis sur le canal partagé de liaison montante (canal « PUSCH » ou canal « NPUSCH »).

Dans le cas PUR, le message de requête pour demander une configuration PUR est décrit dans la spécification 3GPP 36.331 v16.0.0 à la section 5.6.23.2. Le dispositif d'alarme 10 a notamment la possibilité de définir le nombre et la période de répétition des opportunités d'émission PUR souhaités. La configuration PUR est définie à la section 6.3.2 (ou à la section 6.7.3.2 pour le cas IoT).

La procédure CG-SDT est décrite par exemple à la section 8.20.2 de la spécification 3GPP 38.401 v17.0.0, ou à la section 5.27 de la spécification 3GPP 38.321 v17.0.0. La configuration CG-SDT est définie à la section 6.3.2 de la spécification 3GPP 38.331 v17.0.0. Elle définit notamment le nombre et la période de répétition des opportunités d'émission CG-SDT.

Le standard 3GPP décrit des conditions à respecter relativement à la validation d'une avance en temps (TA pour « Timing Advance ») entre le terminal et la station de base 21. Cette validation est notamment basée sur une condition relative à un niveau de puissance reçue d'un signal de référence (RSRP pour « Reference Signal Receive Power », ou NRSRP pour « Narrow-Band Reference Signal Receive Power ») pour la station de base 21. Pour la procédure PUR, ces conditions sont notamment décrites à la section 5.3.3.1 de la spécification 3GPP 36.331 v16.0.0. Pour la procédure CG-SDT, elles sont décrites à la section 5.27.2 de la spécification 3GPP 38.321 v17.0.0.

Contrairement à ce qui est préconisé par le standard, dans la méthode 100 selon l'invention, le message d'alerte est émis par le dispositif d'alarme 10 indépendamment d'une condition relative au niveau de puissance reçue d'un signal de référence (RSRP, ou NRSRP), ou à une avance en temps (TA), pour la station de base 21. En effet, en présence de brouillage, le signal de référence sera masqué par le brouillage, et le niveau de puissance reçue du signal de référence ne sera pas pertinent et ne permettra pas de valider l'avance en temps. Il est donc nécessaire, en cas de brouillage, de ne pas tenir compte du niveau de puissance reçue du signal de référence, et de considérer que l'avance en temps est toujours valide. Il s'agit là d'un écart à la spécification.

Il est à noter que la procédure CG-SDT Type 2 conditionne l'émission d'un message à la réception préalable d'un message de contrôle sur le lien descendant 24 (message DCI, acronyme de « Downlink Control Indication »). Or en cas de brouillage, ce message DCI ne pourra pas être reçu sur le lien descendant 24. La procédure CG-SDT Type 2 ne peut donc pas être utilisée en cas de brouillage.

La figure 6 illustre les étapes d'obtention 110 des ressources radio préconfigurées et d'émission 140 du message d'alerte lorsque la méthode 100 se base sur la procédure de transmission en deux étapes d'un paquet court sur un canal d'accès aléatoire « 2-steps RA-SDT ». Cette procédure est définie par la spécification 3GPP R17 (Release 17).

Dans l'exemple illustré à la figure 6, lorsque le dispositif d'alarme 10 est en mode veille (mode « RRC_IDLE »), une configuration PRACH peut être obtenue dans un message SIB1 émis par la station de base 21 du réseau cellulaire 20 à laquelle le dispositif d'alarme 10 est attachée (le message SIB1 est émis de façon périodique par la station de base 21). Le message d'alerte peut alors ensuite être émis par le dispositif d'alarme 10 sur un canal d'accès aléatoire (canal PRACH, ou canal NPRACH dans le cas IoT) en utilisant les ressources radio définie dans la configuration PRACH.

La configuration PRACH est définie dans la spécification 3GPP 36.331 v16.0.0 à la section 6.3.2. Elle définit notamment le nombre d'occasions PRACH disponibles, à quel moment transmettre, et quelles fréquences utiliser.

La procédure classique de PRACH en quatre étapes (« 4-steps PRACH ») est décrite à la figure 11. Dans la procédure PRACH en quatre étapes, un terminal (UE pour « User Equipment ») effectue une résolution de contention pour transmettre des données. Pour cela, dans une première étape, le terminal transmet un message de requête d'accès aléatoire (« Msg1 », « Requête PRACH »). Dans une deuxième étape, le réseau d'accès répond à cette requête en transmettant un message de réponse (« Msg2 », « Réponse PRACH ») allouant au terminal des ressources radio pouvant être utilisées par sa transmission de données. Le terminal peut alors ensuite émettre ses données, au cours d'une troisième étape, dans un message de transmission de données (« Msg3 », « Transmission de données ») sur le canal PUSCH. Dans une quatrième et dernière étape, le réseau émet un message confirmant la résolution de contention (« Msg 4 », « Résolution de contention »).

En cas de brouillage de fréquences du lien descendant, le terminal ne peut pas recevoir de message provenant du réseau cellulaire. La procédure classique de PRACH en quatre étapes n'est donc pas possible.

Dans la procédure en deux étapes « 2-steps RA-SDT », et tel qu'illustré à la figure 6, le terminal transmet ses données directement dans le premier message, « Msg A », en même temps que la Requête PRACH. Ainsi, après avoir reçu la configuration PRACH dans un message SIB1, le terminal n'a plus besoin de recevoir un autre message du réseau cellulaire sur le lien descendant pour pouvoir émettre ses données. Le message « Msg A » correspond à la combinaison des messages « Msg 1 » et « Msg 3 » de la procédure classique en quatre étapes. Le réseau cellulaire émet ensuite un message de réponse « Msg B » qui correspond à la combinaison des « Msg 2 » et « Msg 4 » de la procédure classique en quatre étapes (ce message « Msg B » n'est pas représenté sur la figure 6 car il n'est pas reçu par le dispositif d'alarme 10 en cas de brouillage).

Le standard 3GPP décrit des conditions à respecter relativement au niveau de puissance reçue du signal de référence (RSRP, ou NRSRP). En particulier, le standard 3GPP préconise que la procédure d'accès aléatoire en deux étapes ne peut être utilisée que si le niveau de puissance reçue du signal de référence est supérieur à un seuil prédéfini. Contrairement à ce qui est préconisé par le standard, dans la méthode 100 selon l'invention, le message d'alerte est émis par le dispositif d'alarme 10 indépendamment d'une condition relative au niveau de puissance reçue du signal de référence pour la station de base 21. En effet, en présence de brouillage, le signal de référence sera masqué par le brouillage, et le niveau de puissance reçue du signal de référence n'est pas pertinent.

Il est possible que le message « Msg A » contenant le message d'alerte ne soit pas correctement reçu par le réseau cellulaire 20 car, comme cela a été expliqué précédemment, les ressources radio PRACH ne sont pas exclusivement réservées au dispositif d'alarme 10 (il peut y avoir des collisions avec un ou plusieurs autres utilisateurs qui peuvent utiliser ces ressources radio en même temps que le dispositif d'alarme 10). Pour optimiser les chances que le message d'alerte soit correctement reçu par le réseau cellulaire 20 (puis acheminé au serveur 40 de télésurveillance), il est avantageux de répéter le message d'alerte plusieurs fois, à plusieurs opportunités d'émission PRACH (plusieurs instants futurs d'émission). Par exemple, le message « Msg A » contenant le message d'alerte est répété quatre fois, à quatre opportunités PRACH différentes.

Il est à noter que le standard 3GPP a introduit les procédures PUR, CG-SDT, et RA-SDT pour limiter la consommation énergétique des terminaux et pour optimiser l'utilisation des ressources radio. Le standard 3GPP ne préconise aucunement l'utilisation de ces procédures pour pallier la présence d'un brouillage des fréquences du lien descendant. L'utilisation de ces procédures pour permettre à un terminal d'émettre même en présence d'un brouillage de fréquences est donc particulièrement inattendue.

L'étape de vérification 130 si un brouillage est présent peut notamment comporter un découpage d'au moins une bande de fréquences du lien descendant 24 du réseau cellulaire 20 en plusieurs sous-bandes de fréquences, et une mesure, pour chaque sous-bande de fréquences, d'un niveau de puissance radio reçue (RSSI pour « Received Signal Strength Indication » en anglais). Un critère de détection de brouillage peut alors être évalué en fonction des mesures obtenues. Par exemple, le critère de détection de brouillage est satisfait si le RSSI d'au moins une sous-bande est supérieur à un seuil, ou si la moyenne des RSSI des différentes sous-bandes est supérieur à un seuil.

La largeur d'une bande de fréquences du lien descendant 24 du réseau cellulaire 20 peut en effet correspondre à plusieurs dizaines de mégahertz, par exemple 30 MHz, et il est avantageux de la découper en sous-bandes moins larges, par exemple des sous-bandes de 1 MHz, voire des sous-bandes de 180 kHz, afin d'obtenir des RSSI individuels représentatifs des différentes sous-bandes. Si seules quelques sous-bandes présentent un niveau de puissance anormalement élevé, il est possible que cela soit dû simplement à une surcharge du réseau. En revanche, si une très grande proportion des sous-bandes présentent un niveau de puissance anormalement élevé, il est probable que cela soit dû à un brouillage.

La figure 7 représente un premier exemple de réalisation d'un dispositif d'alarme 10 selon l'invention, dans lequel l'horloge 12 est un TCXO de 32 MHz présentant une précision de 0,1 parties par millions (ppm). Cela signifie que, dans des situations défavorables, la dérive d'horloge peut entrainer une erreur temporelle supplémentaire de 0,1 $\mu$s à chaque seconde. On a vu précédemment que, dans le cas PUR, la distance temporelle entre l'instant $t_1$ d'obtention des ressources radio préconfigurées et le premier instant futur d'émission $t_{E1}$ est d'au moins 81,92 secondes, ce qui correspond dans le pire cas à une erreur temporelle d'environ 8,2 $\mu$s en raison de la dérive d'horloge. Cette erreur étant supérieure à la durée du préfixe cyclique d'un slot OFDMA, elle pourrait entrainer l'impossibilité pour le réseau cellulaire 20 de décoder correctement un message émis par le dispositif d'alarme 10. C'est la raison pour laquelle une ou plusieurs étapes de calibration 120 doivent être effectuées entre l'instant $t_1$ d'obtention des ressources radio préconfigurées et l'instant $t_{E1}$ d'émission du message d'alerte, afin de maintenir une synchronisation précise entre le dispositif d'alarme 10 et le réseau cellulaire 20 (ou autrement dit pour corriger la dérive de l'horloge 12). Notamment, il est possible de définir une durée maximale autorisée de dérive en fonction de la durée d'un préfixe cyclique et en fonction du niveau de précision de l'horloge 12. Cette durée maximale correspond par exemple à la durée au bout de laquelle l'erreur temporelle due à la dérive deviendra supérieure à la durée d'un préfixe cyclique si on se place dans le pire cas. Dans l'exemple considéré, la durée maximale de dérive serait d'environ 47 secondes si l'on souhaite s'assurer d'avoir une erreur temporelle inférieure à 4,7 $\mu$s. Cela signifie qu'il faut faire une nouvelle calibration 120 de l'horloge 12 au moins toutes les 47 secondes. On peut par exemple envisager de faire une nouvelle calibration 120 toutes les 40 secondes.

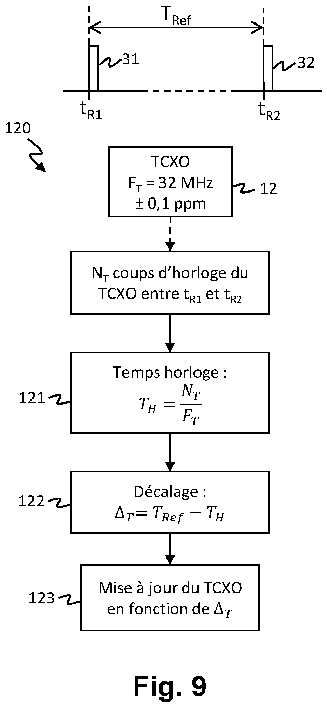

Tel qu'illustré sur les figures 1 et 9, l'étape de calibration 120 peut comporter :

- un calcul 121 d'un temps horloge $T_H$ correspondant à un nombre $N_T$ de coups d'horloge effectués par l'horloge 12 du dispositif d'alarme 10 entre un instant $t_{R1}$ de réception d'une première trame 31 de synchronisation, et un instant $t_{R2}$ de réception d'une deuxième trame 32 de synchronisation,
- un calcul 122 d'un décalage $\Delta_T$ correspondant à une différence de temps entre le temps horloge $T_H$ et un temps de référence $T_{Ref}$ correspondant à une différence temporelle théorique séparant la première et la deuxième trames de synchronisation,
- une mise à jour 123 de l'horloge 12 du dispositif d'alarme 10 en fonction du décalage ainsi calculé.

La trames de synchronisations peuvent notamment correspondre à des trames de signal de synchronisation primaire (PSS pour « Primary Synchronization Signal », ou NPSS pour « Narrow-Band Primary Synchronization Signal » dans le cas IoT).

Par exemple, et tel qu'illustré sur la figure 1, la première trame 31 (N)PSS est reçue préalablement à l'instant $t_{C1}$ de calibration (par exemple à un instant proche de l'instant $t_1$ d'obtention des ressources radio préconfigurées, ou bien à un instant de calibration précédent). La deuxième trame 32 (N)PSS est reçue à un instant proche de l'instant de calibration $t_{C1}$ (il s'agit par exemple de la première trame (N)PSS reçue après $t_{C1}$).

Le temps de référence $T_{Ref}$ correspond au nombre de trames système (SFN pour « System Frame Number ») séparant les deux trames de synchronisation multiplié par la durée d'une trame. Le temps horloge $T_H$ est égale au nombre $N_T$ de coups d'horloge multiplié par la durée d'un coup d'horloge. La durée d'un coup d'horloge est égale à l'inverse de la fréquence $F_T$ du TCXO. Le décalage $\Delta_T$ correspond à une différence entre $T_{Ref}$ et $T_H$.

A l'étape 123, pour compenser la dérive, le pas de la boucle à verrouillage de phase (PLL pour « Phase-Locked Loop » en anglais) du TCXO peut alors être modifié en fonction du décalage $\Delta_T$ calculé.

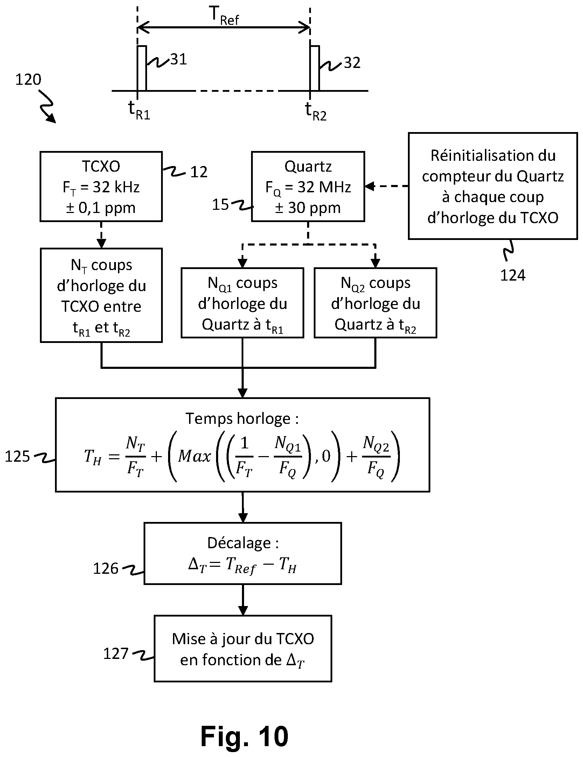

Une horloge haute précision et haute fréquence (telle que celle du premier mode de réalisation décrit en référence aux figures 7 et 9) est cependant onéreuse et énergivore. C'est pourquoi un deuxième mode de réalisation est proposé et décrit en référence aux figures 8 et 10

Dans ce deuxième mode de réalisation, et tel qu'illustré à la figure 8, l'horloge 12 est un TCXO de 32 kHz présentant une précision de 0,1 ppm (autrement dit il s'agit d'une horloge de haute précision et basse fréquence). Le dispositif d'alarme 10 comporte en outre une horloge 15 de 32 MHz avec une précision de 30 ppm (autrement dit il s'agit d'une horloge supplémentaire de faible précision et haute fréquence).

Il convient de noter que les caractéristiques de fréquence et de précision données ici pour les horloges 12 et 15 du dispositif d'alarme 10 ne sont nullement limitatives. D'autres valeurs pourraient être envisagées. Notamment, les termes « haute précision » et « faible précision » sont à considérer relativement l'un par rapport à l'autre. Cela signifie en particulier que la précision de l'horloge de haute précision est supérieure à celle de l'horloge de basse précision (par exemple la précision de l'horloge de haute précision est au moins 10 fois, voire au moins 50 fois, voire au moins 100 fois, supérieure à celle de l'horloge de faible précision). Il en va de même des termes « haute fréquence » et « basse fréquence » (par exemple, la fréquence de l'horloge haute fréquence est au moins 100 fois, voire au moins 500 fois, voire au moins 1000 fois supérieure à celle de l'horloge basse fréquence).

Tel qu'illustré sur la figure 10, l'étape de calibration 120 peut alors comporter :

- à chaque coup d'horloge de l'horloge 12 basse fréquence, une réinitialisation 124 d'un compteur de coups d'horloge de l'horloge 15 haute fréquence,
- une détermination 125 d'un nombre $N_T$ de coups d'horloge de l'horloge 12 basse fréquence entre un instant $t_{R1}$ de réception d'une première trame 31 de synchronisation, et un instant $t_{R2}$ de réception d'une deuxième trame 32 de synchronisation,
- un calcul 125 d'un temps horloge $T_H$ en fonction du nombre $N_T$ de coups d'horloge de l'horloge 12 basse fréquence, et en fonction des nombres $N_{Q1}$ et $N_{Q2}$ de coups d'horloge indiqués par le compteur de coups d'horloge de l'horloge 15 haute fréquence respectivement à l'instant $t_{R1}$ de réception de la première trame 31 de synchronisation et à l'instant $t_{R2}$ de réception de la deuxième trame 32 de synchronisation,
- un calcul 126 d'un décalage $\Delta_T$ correspondant à une différence entre le temps horloge $T_H$, et le temps de référence $T_{Ref}$ correspondant à la différence temporelle théorique séparant la première et la deuxième trames de synchronisation,
- une mise à jour 127 de l'horloge 12 basse fréquence en fonction du décalage ainsi calculé.

Le temps horloge $T_H$ correspond au nombre de cycles entiers de l'horloge 12 basse fréquence effectués entre $t_{R1}$ et $t_{R2}$ auquel il convient d'ajouter le cycle d'horloge incomplet terminé après $t_{R1}$ et le cycle d'horloge incomplet commencé avant $t_{R2}$.

La durée du cycle d'horloge incomplet terminé après $t_{R1}$ est calculée en fonction du nombre $N_{Q1}$ de coups d'horloge indiqués par le compteur de coups d'horloge de l'horloge 15 haute fréquence à l'instant $t_{R1}$. Il peut être calculé sous la forme

$$Max\left(\left(\frac{1}{F_T} - \frac{N_{Q1}}{F_Q}\right), 0\right)$$

, expression dans laquelle $F_Q$ est la fréquence de l'horloge 15 haute fréquence.

La durée du cycle d'horloge incomplet commencé avant $t_{R2}$ est calculée en fonction du nombre $N_{Q2}$ de coups d'horloge indiqués par le compteur de coups d'horloge de l'horloge 15 haute fréquence à l'instant $t_{R2}$. Il est égal à $\dfrac{N_{Q2}}{F_Q}$.

De façon avantageuse, même si la précision de l'horloge 15 haute fréquence est faible (30 ppm dans l'exemple considéré), l'erreur temporelle due à la dérive cumulée sur un cycle d'horloge de l'horloge 12 basse fréquence reste faible. Le deuxième mode de réalisation décrit en référence aux figures 8 et 10 permet ainsi de maintenir une synchronisation précise entre le dispositif d'alarme 10 et le réseau cellulaire 20 sans avoir à utiliser une horloge haute fréquence de haute précision. Ce deuxième mode de réalisation est particulièrement avantageux pour les dispositifs d'alarme fonctionnant avec des piles ou une batterie.

Il est à noter qu'il est également envisageable de calibrer l'horloge 15 haute fréquence à chaque coup d'horloge de l'horloge 12 basse fréquence, ou à chaque fois qu'un nombre prédéterminé de coups d'horloge de l'horloge 12 basse fréquence est atteint, afin de limiter la dérive de l'horloge 15 haute fréquence.

## Revendications

1. Méthode (100) pour l'émission d'un message d'alerte par un dispositif d'alarme (10), vers un réseau cellulaire (20), en présence d'un brouillage de bandes de fréquences d'un lien descendant du réseau cellulaire (20), ladite méthode (100) comportant les étapes suivantes :

   - à un premier instant ($t_1$), en absence de brouillage : une obtention (110), à partir d'un message émis par le réseau cellulaire (20) et reçu par le dispositif d'alarme (10), de ressources radio préconfigurées pouvant être utilisées pour l'émission du message d'alerte à au moins un instant futur ($t_{E1}$),

- à au moins un instant de calibration ($t_{C1}$) compris entre le premier instant ($t_1$) et ledit au moins un instant futur ($t_{E1}$) : une calibration (120) d'une horloge (12) du dispositif d'alarme (10) pour corriger une éventuelle dérive de ladite horloge (12) par rapport à une horloge du réseau cellulaire (20),

- lorsqu'une intrusion est détectée par le dispositif d'alarme (10) : une vérification (130) si un brouillage est présent,

- si un brouillage est présent : une émission (140) du message d'alerte audit au moins un instant futur ($t_{E1}$) en utilisant les ressources radio préconfigurées.

2. Méthode (100) selon la revendication 1 dans laquelle :

- le réseau cellulaire (20) est un réseau LTE ou 5G-NR supportant la procédure « PUR » définie par la spécification 3GPP R16,

- les ressources radio préconfigurées sont définies par une configuration « PUR » reçue par le dispositif d'alarme (10) dans un message de relâchement de connexion, « RRC Release », émis par une station (21) du réseau cellulaire (20),

- le message d'alerte est émis par le dispositif d'alarme (10) sur un canal partagé de liaison montante, « (N)PUSCH », indépendamment d'une condition relative au niveau de puissance reçue d'un signal de référence, « (N)RSRP », ou à une avance en temps, « TA », pour ladite station (21).

3. Méthode (100) selon la revendication 1 dans laquelle :

- le réseau cellulaire (20) est un réseau 5G-NR supportant la procédure « CG-SDT Type 1 » définie par la spécification 3GPP R17,

- les ressources radio préconfigurées sont définies par une configuration « CG-SDT Type 1 » reçue par le dispositif d'alarme (10) dans un message de relâchement de connexion, « RRC Release », émis par une station (21) du réseau cellulaire (20),

- le message d'alerte est émis par le dispositif d'alarme (10) sur un canal partagé de liaison montante, « (N)PUSCH », indépendamment d'une condition relative au niveau de puissance reçue d'un signal de référence, « (N)RSRP », ou à une avance en temps, « TA », pour ladite station (21).

4. Méthode (100) selon la revendication 1 dans laquelle :

- le réseau cellulaire (20) est un réseau 5G-NR supportant la procédure de transmission en deux étapes d'un paquet court sur un canal d'accès aléatoire, « 2-steps RA-SDT », définie par la spécification 3GPP R17,

- les ressources radio préconfigurées sont définies par une configuration « PRACH » reçue par le dispositif d'alarme (10) dans un message d'information système, « SIB1 », émis par une station (21) du réseau cellulaire (20),

- le message d'alerte est émis par le dispositif d'alarme (10) sur un canal d'accès aléatoire, « (N)PRACH », indépendamment d'une condition relative au niveau de puissance reçue d'un signal de référence, « (N)RSRP », pour ladite station (21).

5. Méthode (100) selon la revendication 4 dans laquelle les ressources radio préconfigurées définissent plusieurs opportunités d'émission à plusieurs instants futurs, et le message d'alerte est émis de façon répétée à plusieurs desdits instants futurs.

6. Méthode (100) selon l'une quelconque des revendications 1 à 5 dans laquelle l'étape de calibration (120) comporte :

- un calcul (121) d'un temps horloge correspondant à un nombre de coups d'horloge effectués par l'horloge (12) du dispositif d'alarme (10) entre un instant ($t_{R1}$) de réception d'une première trame de synchronisation, et un instant ($t_{R2}$) de réception d'une deuxième trame de synchronisation,

- un calcul (122) d'un décalage correspondant à une différence de temps entre le temps horloge et un temps de référence ($T_{Ref}$) correspondant à une différence temporelle théorique séparant la première et la deuxième trames de synchronisation,

- une mise à jour (123) de l'horloge (12) du dispositif d'alarme (10) en fonction du décalage ainsi calculé.

7. Méthode (100) selon l'une quelconque des revendications 1 à 5 dans laquelle l'horloge (12) du dispositif d'alarme (10) est une horloge de haute précision et basse fréquence, le dispositif d'alarme comporte en outre une horloge (15) supplémentaire de faible précision et haute fréquence, et l'étape de calibration (120) comporte :

- à chaque coup d'horloge de l'horloge (12) basse fréquence, une réinitialisation (124) d'un compteur de coups d'horloge de l'horloge

(15) haute fréquence,
- une détermination (125) d'un nombre de coups d'horloge de l'horloge (12) basse fréquence entre un instant ($t_{R1}$) de réception d'une première trame de synchronisation, et un instant ($t_{R2}$) de réception d'une deuxième trame de synchronisation,
- un calcul (125) d'un temps horloge en fonction du nombre de coups d'horloge de l'horloge (12) basse fréquence, et en fonction des nombres de coups d'horloge indiqués par le compteur de coups d'horloge de l'horloge (15) haute fréquence respectivement à l'instant ($t_{R1}$) de réception de la première trame de synchronisation et à l'instant ($t_{R2}$) de réception de la deuxième trame de synchronisation,
- un calcul (126) d'un décalage correspondant à une différence entre le temps horloge ainsi calculé, et un temps de référence ($T_{Ref}$) correspondant à une différence temporelle théorique séparant la première et la deuxième trames de synchronisation,
- une mise à jour (127) de l'horloge (12) basse fréquence en fonction du décalage ainsi calculé.

8. Méthode (100) selon l'une quelconques des revendications 1 à 7 dans laquelle ledit au moins un instant de calibration ($t_{C1}$) est défini par le dispositif d'alarme (10) en fonction d'une durée maximale de dérive, ladite durée maximale de dérive étant prédéfinie en fonction de la durée d'un préfixe cyclique présent dans une trame du réseau cellulaire (20) et en fonction d'un niveau de précision de l'horloge (12) du dispositif d'alarme (10).

9. Méthode (100) selon l'une des revendications 1 à 8 dans laquelle l'étape de vérification (130) si un brouillage est présent comporte :

- un découpage d'au moins une bande de fréquences du lien descendant du réseau cellulaire (20) en plusieurs sous-bandes de fréquences,
- une mesure, pour chaque sous-bande de fréquences, d'un niveau de puissance radio reçue,
- une évaluation d'un critère de détection de brouillage en fonction des mesures obtenues.

10. Dispositif d'alarme (10), adapté pour émettre un message d'alerte vers un réseau cellulaire (20) en présence d'un brouillage de bandes de fréquences d'un lien descendant du réseau cellulaire (20), ledit dispositif d'alarme (10) comprenant :

- un module de communication (11) sans fil adapté pour communiquer avec le réseau cellulaire,
- une horloge (12),
- un module de détection de brouillage (13), et

- un module de détection d'intrusion (14),

le dispositif d'alarme (10) est configuré pour :

- à un premier instant ($t_1$), en absence de brouillage : obtenir des ressources radio préconfigurées, à partir d'un message émis par le réseau cellulaire (20) et reçu par le module de communication (11), lesdites ressources radio préconfigurées pouvant être utilisées par le module de communication (11) pour émettre le message d'alerte à au moins un instant futur ($t_{E1}$),
- à au moins un instant de calibration ($t_{C1}$) compris entre le premier instant ($t_1$) et ledit au moins un instant futur ($t_{E1}$) : calibrer l'horloge (12) pour corriger une éventuelle dérive de ladite horloge (12) par rapport à une horloge du réseau cellulaire (20),
- lorsqu'une intrusion est détectée par le module de détection d'intrusion (14) : vérifier si un brouillage est présent à l'aide du module de détection de brouillage (13),
- si un brouillage est présent : émettre le message d'alerte audit au moins un instant futur ($t_{E1}$) en utilisant les ressources radio préconfigurées.

11. Dispositif d'alarme (10) selon la revendication 10 dans lequel :

- le module de communication (11) est configuré pour recevoir les ressources radio préconfigurées dans une configuration « PUR » incluse dans un message de relâchement de connexion, « RRC Release », émis par une station (21) du réseau cellulaire (20),
- le module de communication (11) est configuré pour émettre le message d'alerte sur un canal partagé de liaison montante, « (N)PUSCH », indépendamment d'une condition relative au niveau de puissance reçue d'un signal de référence, « (N)RSRP », ou à une avance en temps, « TA », pour ladite station (21).

12. Dispositif d'alarme (10) selon la revendication 10 dans lequel :

- le module de communication (11) est configuré pour recevoir les ressources radio préconfigurées dans une configuration « CG-SDT Type 1 » incluse dans un message de relâchement de connexion, « RRC Release », émis par une station (21) du réseau cellulaire (20),
- le module de communication (11) est configuré pour émettre le message d'alerte sur un canal partagé de liaison montante, « (N)PUSCH », indépendamment d'une condition relative au niveau de puissance reçue d'un signal de référence, « (N)RSRP », ou à une avance en temps, « TA », pour ladite station (21).

**13.** Dispositif d'alarme (10) selon la revendication 10 dans lequel :

- le module de communication (11) est configuré pour recevoir les ressources radio préconfigurées dans une configuration « PRACH » incluse dans un message d'information système, « SIB1 », émis par une station (21) du réseau cellulaire (20),
- le module de communication (11) est configuré pour émettre le message d'alerte sur un canal d'accès aléatoire, « (N)PRACH », indépendamment d'une condition relative au niveau de puissance reçue d'un signal de référence, « (N) RSRP », pour ladite station (21).

**14.** Dispositif d'alarme (10) selon l'une quelconque des revendications 10 à 13 dans lequel le dispositif d'alarme (10) est configuré pour :

- calculer un temps horloge correspondant à un nombre de coups d'horloge effectués par l'horloge (12) entre un instant ($t_{R1}$) de réception d'une première trame de synchronisation, et un instant ($t_{R2}$) de réception d'une deuxième trame de synchronisation,
- calculer un décalage correspondant à une différence entre le temps horloge et un temps de référence ($t_{Ref}$) correspondant à une différence temporelle théorique séparant la première et la deuxième trames de synchronisation,
- mettre à jour l'horloge (12) en fonction du décalage ainsi calculé.

**15.** Dispositif d'alarme (10) selon l'une quelconque des revendications 10 à 13 dans lequel l'horloge (12) du dispositif d'alarme (10) est une horloge de haute précision et basse fréquence, le dispositif d'alarme (10) comporte en outre une horloge (15) supplémentaire de faible précision et haute fréquence, et le dispositif d'alarme (10) est configuré pour :

- à chaque coup d'horloge de l'horloge (12) basse fréquence, réinitialiser un compteur de coups d'horloge de l'horloge (15) haute fréquence,
- déterminer un nombre de coups d'horloge de l'horloge (12) basse fréquence entre un instant ($t_{R1}$) de réception d'une première trame de synchronisation, et un instant ($t_{R2}$) de réception d'une deuxième trame de synchronisation,
- calculer un temps horloge en fonction du nombre de coups d'horloge de l'horloge (12) basse fréquence, et en fonction des nombres de coups d'horloge indiqués par le compteur de coups d'horloge de l'horloge (15) haute fréquence respectivement à l'instant ($t_{R1}$) de réception de la première trame de synchronisation et à l'instant ($t_{R2}$) de réception de la deuxième trame de synchronisation,
- calculer un décalage correspondant à une différence entre le temps horloge et un temps de référence ($t_{Ref}$) correspondant à une différence temporelle théorique séparant la première et la deuxième trames de synchronisation,
- mettre à jour l'horloge (12) basse fréquence en fonction du décalage ainsi calculé.

Fig. 1

EP 4 521 376 A1

100

110 — Obtention de ressources radio préconfigurées

Détermination d'un prochain temps de calibration $t_c$ — 115

Intrusion détectée ?

Non → $t_c$ atteint ?

Non → Fin de validité des ressources radio préconfigurées ?

Non

Oui

Oui → Calibration de l'horloge du dispositif d'alarme — 120

Oui

Brouillage détecté ? — 130

Non → Emission du message d'alerte de façon conventionnelle

Oui → Emission du message d'alerte en utilisant les ressources radio préconfigurées — 140

**Fig. 2**

**Fig. 3**

**Fig. 4**

EP 4 521 376 A1

Dispositif d'alarme ⟿10

Réseau cellulaire ⟿20

RRC CONNECTED

Requête de configuration PUR ou CG-SDT →

110

RRC_RELEASE + configuration PUR ou CG-SDT ←

RRC INACTIVE ou RRC IDLE

RRC_RESUME + message d'alerte →

140

**Fig. 5**

Dispositif d'alarme ⟿10

20⟿ Réseau cellulaire

RRC IDLE

110

SIB1 + configuration PRACH ←

140

MSG A : Requête PRACH + message d'alerte →

**Fig. 6**

**Fig. 7**

**Fig. 8**

$$T_{Ref}$$

31

32

$$t_{R1}$$ $$t_{R2}$$

120

TCXO
$$F_T = 32 \text{ MHz}$$
$$\pm 0,1 \text{ ppm}$$

12

$$N_T$$ coups d'horloge du
TCXO entre $$t_{R1}$$ et $$t_{R2}$$

Temps horloge :

$$T_H = \frac{N_T}{F_T}$$

121

Décalage :
$$\Delta_T = T_{Ref} - T_H$$

122

Mise à jour du TCXO
en fonction de $$\Delta_T$$

123

**Fig. 9**

$T_{Ref}$

31

32

$t_{R1}$    $t_{R2}$

120

| TCXO<br>$F_T$ = 32 kHz<br>± 0,1 ppm | 12 | Quartz<br>$F_Q$ = 32 MHz<br>± 30 ppm | 15 | Réinitialisation du<br>compteur du Quartz<br>à chaque coup<br>d'horloge du TCXO |

$N_T$ coups
d'horloge du
TCXO entre
$t_{R1}$ et $t_{R2}$

$N_{Q1}$ coups
d'horloge du
Quartz à $t_{R1}$

$N_{Q2}$ coups
d'horloge du
Quartz à $t_{R2}$

124

Temps horloge :

$$T_H = \frac{N_T}{F_T} + \left( Max\left( \left( \frac{1}{F_T} - \frac{N_{Q1}}{F_Q} \right), 0 \right) + \frac{N_{Q2}}{F_Q} \right)$$

125

Décalage :
$$\Delta_T = T_{Ref} - T_H$$

126

Mise à jour du TCXO
en fonction de $\Delta_T$

127

## Fig. 10

**Fig. 11**

Europäisches
Patentamt

European
Patent Office

Office européen
des brevets

# RAPPORT DE RECHERCHE EUROPEENNE

Numéro de la demande

**EP 23 30 6493**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | EP 4 102 746 A1 (ARLO TECH INC [US]) 14 décembre 2022 (2022-12-14) | 1,6,9, 10,14 | INV.<br>G08B29/04 |
| A | * abrégé *<br>* alinéa [0007] – alinéa [0015] *<br>* alinéa [0018] – alinéa [0032] *<br>* figures 1-5 * | 2-5,7,8, 11-13,15 | G08B25/08<br>G08B29/20 |
| Y | US 2011/176464 A1 (WARNER ROBERT [US] ET AL) 21 juillet 2011 (2011-07-21) | 1,6,9, 10,14 | |
| A | * alinéa [0032] * | 2-5,7,8, 11-13,15 | |
| Y | EP 3 920 634 A1 (LG ELECTRONICS INC [KR]) 8 décembre 2021 (2021-12-08) | 1,6,9, 10,14 | |
| A | * abrégé *<br>* alinéa [0270] – alinéa [0272] * | 2-5,7,8, 11-13,15 | |
| A | US 2011/151791 A1 (SNIDER JAMES [US] ET AL) 23 juin 2011 (2011-06-23)<br>* abrégé *<br>* alinéa [0033] – alinéa [0034] *<br>* alinéa [0037] – alinéa [0039] *<br>* alinéa [0046] – alinéa [0050] *<br>* alinéa [0056] – alinéa [0061] *<br>* figures 1,4,5 * | 1-15 | DOMAINES TECHNIQUES RECHERCHES (IPC)<br>G08B<br>H04M |
| A | US 2002/059535 A1 (BEKRITSKY BENJAMIN J [US] ET AL) 16 mai 2002 (2002-05-16)<br>* alinéa [0002] *<br>* alinéa [0026] * | 1-15 | |

Le présent rapport a été établi pour toutes les revendications

| Lieu de la recherche | Date d'achèvement de la recherche | Examinateur |
|---|---|---|
| Munich | 23 février 2024 | La Gioia, Cosimo |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

................................................................
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 23 30 6493

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

23-02-2024

| Document brevet cité au rapport de recherche | | Date de publication | Membre(s) de la famille de brevet(s) | | Date de publication |
|---|---|---|---|---|---|
| EP 4102746 | A1 | 14-12-2022 | EP | 4102746 A1 | 14-12-2022 |
| | | | US | 2022393785 A1 | 08-12-2022 |
| US 2011176464 | A1 | 21-07-2011 | AUCUN | | |
| EP 3920634 | A1 | 08-12-2021 | CN | 113439478 A | 24-09-2021 |
| | | | EP | 3920634 A1 | 08-12-2021 |
| | | | US | 2022085942 A1 | 17-03-2022 |
| | | | WO | 2020167102 A1 | 20-08-2020 |
| US 2011151791 | A1 | 23-06-2011 | BR | 112012017332 A2 | 19-04-2016 |
| | | | CN | 102656615 A | 05-09-2012 |
| | | | DE | 112010004935 T5 | 06-12-2012 |
| | | | KR | 20120120242 A | 01-11-2012 |
| | | | US | 2011151791 A1 | 23-06-2011 |
| | | | WO | 2011084608 A1 | 14-07-2011 |
| US 2002059535 | A1 | 16-05-2002 | AT | E457619 T1 | 15-02-2010 |
| | | | AT | E478481 T1 | 15-09-2010 |
| | | | AT | E506828 T1 | 15-05-2011 |
| | | | AU | 784463 B2 | 06-04-2006 |
| | | | AU | 785280 B2 | 21-12-2006 |
| | | | AU | 2688402 A | 27-05-2002 |
| | | | AU | 2002226884 B2 | 01-06-2006 |
| | | | BR | 0107383 A | 05-11-2002 |
| | | | BR | 0107786 A | 22-10-2002 |
| | | | BR | 0115959 A | 03-05-2005 |
| | | | CA | 2398779 A1 | 23-05-2002 |
| | | | CA | 2398781 A1 | 23-05-2002 |
| | | | CA | 2419796 A1 | 23-05-2002 |
| | | | CN | 1500323 A | 26-05-2004 |
| | | | CN | 1568599 A | 19-01-2005 |
| | | | CN | 1636413 A | 06-07-2005 |
| | | | EP | 1334578 A2 | 13-08-2003 |
| | | | EP | 1336277 A2 | 20-08-2003 |
| | | | EP | 1336310 A2 | 20-08-2003 |
| | | | JP | 3961951 B2 | 22-08-2007 |
| | | | JP | 4226325 B2 | 18-02-2009 |
| | | | JP | 4594585 B2 | 08-12-2010 |
| | | | JP | 4717035 B2 | 06-07-2011 |
| | | | JP | 2004514356 A | 13-05-2004 |
| | | | JP | 2004514376 A | 13-05-2004 |
| | | | JP | 2004529520 A | 24-09-2004 |
| | | | JP | 2007295621 A | 08-11-2007 |
| | | | KR | 20020064979 A | 10-08-2002 |
| | | | KR | 20020079734 A | 19-10-2002 |

EPO FORM P0460

Pour tout renseignement concernant cette annexe : voir Journal Officiel de l'Office européen des brevets, No.12/82

**EP 4 521 376 A1**

**ANNEXE AU RAPPORT DE RECHERCHE EUROPEENNE
RELATIF A LA DEMANDE DE BREVET EUROPEEN NO.**

EP 23 30 6493

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

23-02-2024

| Document brevet cité au rapport de recherche | Date de publication | Membre(s) de la famille de brevet(s) | Date de publication |
|---|---|---|---|
| | | KR 20030066636 A | 09-08-2003 |
| | | TW 582143 B | 01-04-2004 |
| | | TW I235615 B | 01-07-2005 |
| | | US 2002059535 A1 | 16-05-2002 |
| | | US 2002097182 A1 | 25-07-2002 |
| | | US 2002098852 A1 | 25-07-2002 |
| | | US 2006125690 A1 | 15-06-2006 |
| | | US 2006160545 A1 | 20-07-2006 |
| | | WO 0241504 A2 | 23-05-2002 |
| | | WO 0241545 A2 | 23-05-2002 |
| | | WO 0241651 A2 | 23-05-2002 |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 3477611 B1